# EUROPEAN PATENT APPLICATION

(11) **EP 1 768 047 A2**
(43) Date of publication of application: **28.03.2007**
(21) Application number: 06020253.8
(22) Date of filing: 27.09.2006
(51) Int. Cl.: G06F 21/20

(54) **System for identifing a password for a user to electronically access an institution**

(30) Priority: 27.09.2005 BR pi0506238
(71) Applicant: Banco Bradesco S.A., 06029-900 Osasco SP (BR)
(72) Inventor: Camara, Marcelo Ribeiro, BR-06454-050-Barueri-SP (BR)
(74) Representative: Geyer, Fehners & Partner

(57) **Abstract**

"SYSTEM FOR IDENTIFYING A PASSWORD FOR A USER TO ELECTRONICALLY ACCESS AN INSTITUTION", comprising: an access password (S) formed by characters (41, 51) selected from at least two different character sets (40, 50) that define respective portions (S1, S2) of the access password (S); - a communication means (30) for transmitting instructions and characters of the user's personal identification between the user and the institution (10); - a personal identification generating means (11) that randomly generates and transmits character sequences (40a, 50a) to the monitor/display (21) of the user's terminal (20), at each access operation, selected from a respective character set (40, 50);- a sequence handling means (22) to provide, on the monitor/display (21) of the terminal (20), successive displacements of a character sequence (40a, 50a) in relation to the other; - a character selecting means (27) to be operated by the user, in order to register each correspondence positioning selected by the user between a character of a character sequence belonging to a portion (S1) of the access password (S) and a character of another character sequence belonging to another portion (S2) of access password (S), combining them in a selection signal to be then sent to the institution; - a verifying means (13) operated by the institution (10) to verify whether the selection signal produced by the user and which contains the register of each positioning selected by the user indicates the character positionings of a password portion (S1) corresponding to the character positioning of another password portion (S2), to be validated by the system and, if positive, to release the electronic access of the user to the institution.

## Description

### Field of the Invention

The present invention relates to a system for identifying a password for a user to electronically access an institution of restricted access, such as a financial institution, with the purpose of increasing the security of the access to said institution, particularly the electronic access that is made, for example, via Internet from a fixed or mobile terminal.

### Prior Art

The electronic access to institutions of restricted and controlled access, such as banks, is usually effected by the bank customer from an electronic terminal, such as a computer provided with a monitor, keyboard, mouse and other peripherals, or from a fixed or mobile telephone provided with a display and by using a communication network, such as the Internet, for operational connection to the WEB servers of the institution.

In the known prior art systems for identifying a user in the operations of electronic access to financial institutions by means of a communication network, such as the Internet, after the usual operations to identify the user, the latter is asked, through instructions sent by the institution to the monitor or display of the terminal, to inform his personal identification password, which can be defined by a certain number of characters or symbols known by the institution and which are usually complemented by an additional password in the form of an expression or sentence in alphabetical characters.

Although this known systems use simple or compound access passwords that are memorized by the user and by the institution and therefore not easily available to third parties, these systems keep the same password during the identification operation, that is to say, they send the same electronic instructions via communication network to the institution, at each access of the user to the latter, jeopardizing the system security regarding the inviolability of the user's access password.

The utilization of fixed access password facilitates fraudsters to track or listen to the data that are being transmitted either electronically or by telephone. In this situation, the fraudsters can obtain all the user's data and also his simple or compound password, and access the institution as a registered and regularly qualified user.

On account of the fragility regarding the inviolability of the fixed access password, some solutions have been proposed, according to which the password is formed from characters that are extracted, under a constant standard and that is known by both the user and the institution, from a matrix, whose character composition varies periodically or at each access operation, avoiding the password to be obtained by non-authorized third parties.

A known prior art system is disclosed in US patent 5,251,259. This identification system uses an identification card provided with a matrix with characters produced for each user, who must provide to the institution a password formed by a certain number of characters that occupy determined positions in the matrix which are memorized by the users and also defined by the day of the week and by the number of accesses effected in the same day.

In this prior art system, the user utilizes a magnetic card to access the institution and, after being identified, he is requested to provide a password which varies depending on the day of the week and the number of operations effected in the same day, said password being defined by the user before each access operation and the character matrix in this case remains unchanged for that user.

Although allowing the utilization of a variable password that is defined from a fixed code provided to the user, said prior art system is rather complex, requiring that the user himself defines the password by memorizing determined reference characters to access the matrix and extract therefrom the characters that form the password, considering the day of the week and the number of operations already effected in the same day. The system described above requires a level of attention and mental effort which are not always well accepted by the customer. Furthermore, this prior art system requires the user to keep with him, in each access operation, the matrix or matrices that define the symbols or characters to be presented as the correct code of that user in that operation and the matrix sets can be fixed or periodically substituted by the institution. This type of system is more used for obtaining the accesses to the institution from fixed terminals belonging to individuals or legal entities.

### Summary of the Invention

By reason of the limitations and drawbacks of the known solutions, it is a generic object of the present invention to provide a system for identifying a password for a user to electronically access an institution of restricted access, from a private, fixed or mobile terminal and by using a communication network, such as the Internet, which is easy to implement and to operate and which allows the institution to recognize the user's fixed access password in each operation to access said institution, without the user having to provide to the institution his memorized personal access password.

It is a more specific object of the present invention to provide a system for identifying the electronic access password, as mentioned above and which allows the institution to identify the elements that form the password based on the relative positionings between two sets of symbols or characters, in which are defined the elements that constitute the access password, without requiring the user to keep with him a memorizing means of said relative positionings which lead to the formation of the memorized password at each access operation to the institution.

These and other objects of the present invention are achieved with the provision of a system for identifying the password for a user to electronically access an institution of restricted access, via communication network and from a fixed or mobile terminal provided with a monitor/display defining an interface with the user, said system comprising:
- an access password formed by characters selected from at least two different character sets that define respective access password portions, which are previously provided to and memorized by the user;
- a communication means for transmitting instructions and characters of the user's personal identification, between the user and the institution;
- a personal identification generating means to be operated by the institution, in order to randomly generate and transmit to the user's terminal monitor/display, at each access operation, character sequences, each sequence comprising a certain number of characters selected from a respective character set;
- a sequence handling means to be operated by one of the parts, which sequence can be defined by either the user or the institution, in order to provide, on the terminal monitor/display, successive displacements of a character sequence in relation to the other, so as to make each character of said character sequence to occupy, at each displacement, a positioning corresponding to a character of another character sequence;
- a character selecting means operatively associated with the terminal and to be operated by the user, in order to register each correspondence positioning selected by the user between a character of a character sequence belonging to an access password portion and a character of another character sequence belonging to another access password portion, combining them in a selection signal to be sent to the institution afterwards;
- a verifying means operated by the institution, in order to verify whether the selection signal produced by the user and which contains the register of each positioning selected by the user indicates the character positionings of a password portion corresponding to the character positioning of another password portion, so as to be validated by the system and, if positive, to release the electronic access of the user to the institution.

The system proposed above may comprise, for example, two character sets, one being formed by alphabetical characters and the other formed by numeric characters, from which are extracted the characters that form the access password, having an alphabetical portion and a numeric portion which the user receives and memorizes.

By verifying the correspondence positioning of a character of a password portion with any of the characters of the other password portion, the user activates, in his terminal, a character selecting means, repeating the operation until he has selected all the characters of said password portion in relation to any of the characters of the other password portion, the access password being thus completed and transmitted to the institution which validates and releases the access when appropriate.

This system allows the utilization of known compound alphanumeric passwords already in use and memorized by the user, further adding a codifying means which checks the access password of each user, without requiring said password to be electronically or verbally transmitted to the institution at each access operation. The character composition of each of the character sequences is randomly modified at each access operation, making considerably more difficult for third parties to detect the password based on the information transmitted between the user and the institution during each electronic access operation.

### Brief Description of the Drawings

The invention will be described below, with reference to the enclosed drawings, given by way of example of a possible form of carrying out the invention and in which:

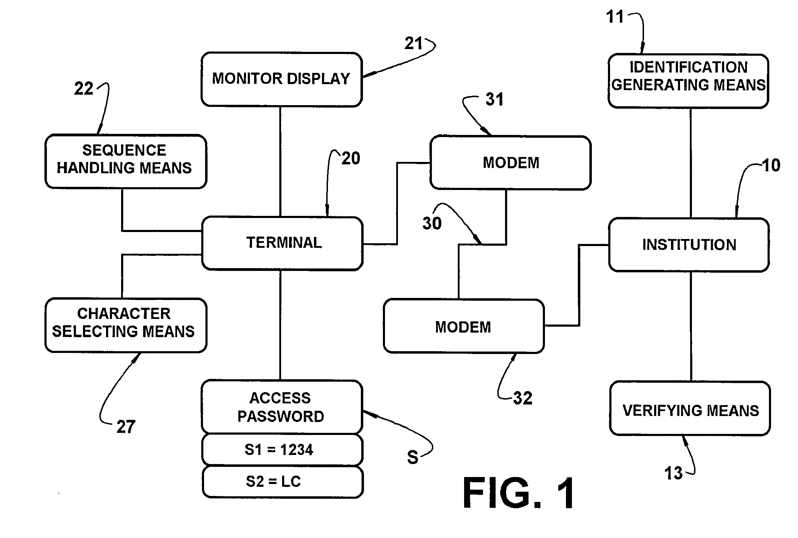

Figure 1 represents a block diagram of the elements that constitute the present system according to one embodiment in which the sequence handling means is operated by the user from the access terminal;
Figure 2 is a schematic frontal view of a possible representation, on a terminal monitor/display, of a pair of character sequences, arranged in concentric and adjacent circles and with their characters in a relative positioning that does not allow registering any of the characters of the chosen access password; and
Figures 3-11 are views similar to that of Figure 2, but illustrating, in a rather simplified way, the operations in which the user handles the two character sequences and sequentially selects the characters that form an exemplary alphanumeric password.

### Detailed Description of the Invention

The present password identification system is particularly adequate to the operations of electronically accessing an institution 10 of restricted access, said operations being carried out through a communication network, such as the Internet, and from a terminal 20, usually in the form of a computer or a fixed or mobile telephone provided with a monitor/display 21, defining a visual interface with the user. A communication means 30, generally in the form of a modem 31, 32, is operatively associated with both the institution 10 and the terminal 20 for allowing the transmission of personal identification characters and digital instructions between the institution 10 and the terminal 20 of the user.

In the initial steps to access the institution 10, the user is asked, in the monitor/display 21 of his terminal 20, to provide the institution 10 with the personal identification data, as well as the type of operations to be executed in the systems of the institution 10.

After receiving the user's initial identification, the institution 10 asks him to present his access password S, which has been previously determined jointly with the institution 10 and memorized by the user. In the description below, the password S is formed by a first password portion S1, defined by at least two numeric characters and by a second password portion S2 defined by one or more alphabetic characters, such as the passwords usually used by the bank customers to access their respective accounts in an institution 10. It should be understood that the password S could have more than two password portions, each defined by characters of any nature which are selected from a respective character set 40, 50.

According to the invention, in order to receive a password S from the user in an access operation, the institution 10 randomly generates, through a personal identification generating means 11, at least two character sequences 40a, 50a, each containing a certain number of characters 41, 51 selected from the respective character set 40, 50 and which is much greater than the number of characters used in the formation of the password portions S1, S2. The character sequences 40a, 50a, randomly generated by the personal identification generating means 11, are transmitted to the user's terminal 20 and shown in the monitor/display 21 in an arrangement such as to allow each character of a sequence to occupy a positioning corresponding to a character of another character sequence.

In the illustrated embodiment, the personal identification generating means 11 generates two character sequences 40a, 50a, which are protected in the monitor/display 21 in the form of two concentric and adjacent circular alignments, said sequences presenting the same number of characters, the characters 41 of a character sequence 40a occupying a corresponding positioning radially aligned with a respective character 51 of the other character sequence 50a. However, it should be understood that the character sequences 40a, 50a could be disposed in different arrangements, as long as they allow establishing a correspondence positioning between the characters of the character sequences 40a, 50a.

The present system further comprises a sequence handling means 22 operatively associated with the monitor/display 21 and to be operated by the user or by the institution 10 to provide, in the monitor/display 21, successive displacements of a character sequence 40a in relation to another character sequence 50a, in order to make each character 41 of said character sequence 40a to occupy, at each displacement, a positioning corresponding to a character 51 of another character sequence 50a.

In the illustrated example, the sequence handling means 22 is operated by the user making use of a keyboard, a mouse, or even a touch screen system (not illustrated). In the figures of the drawings, the illustrated monitor/display 21 further displays, by instruction of the institution 10, two handling icons 23, each associated with a displacement direction to be given to one of the character sequences 40a upon user's command, a correction icon 24, and a character selection icon 25.

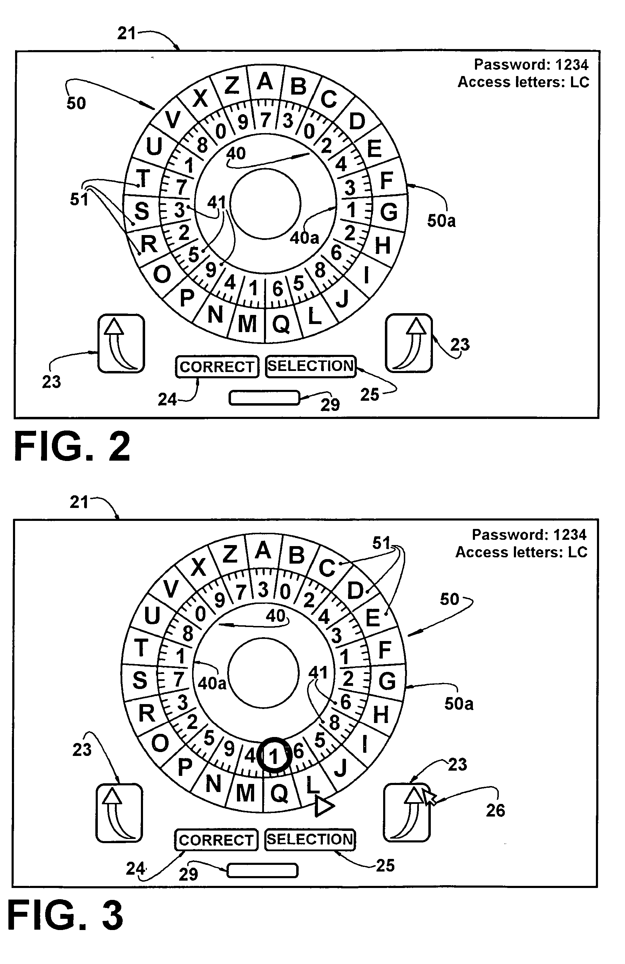

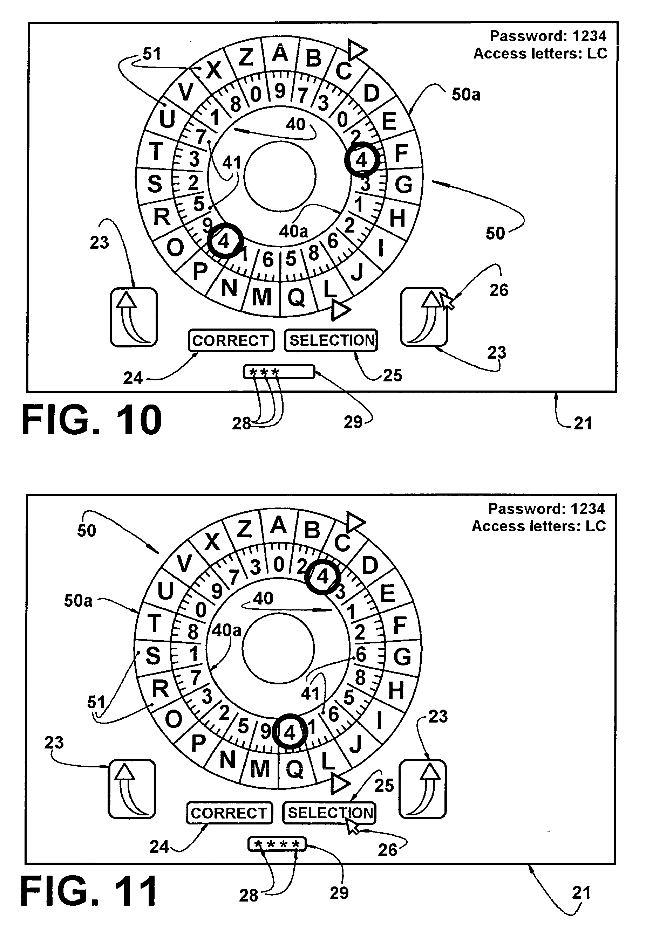

As illustrated in figures 3-11, the sequence handling means 22 can be operated by the user with the aid of a mouse represented by the arrow 26, which can be positioned onto any one of the handling icons 23, correction icon 24 and character selection icon 25, for allowing the user to perform the operations that inform the institution about an element that forms part of the access password S.

The present system further comprises a character selecting means 27 operatively associated with both the terminal 20 and the character selection icon 25 and to be operated by the user to send to the institution 10, through the communication means 30, a password selection signal representative of the register of the positionings corresponding to the selection, by the user, of each character 40 of a respective character sequence 40a belonging to a portion S1 of the access password S, when associated with a position corresponding to a character 51 of another character sequence 50a belonging to another portion S2 of the access password S.

The present system further comprises a verifying means 13 operated by the institution 10 and which verifies whether the selection signal, produced by the user, indicates the character positionings of a password portion S1 and of a character sequence 40a, corresponding to the character positionings of another password portion S2 and of another character sequence 50a. The first character selected from a password portion S1 and from a character sequence 40a initiates the formation of a chain of characters to be added with the subsequent characters until the formation of said chain has been completed, which chain will be transmitted through the communication means 30 so that the verifying means 13 of the institution 10 validates and releases the electronic access to the institution 10 when appropriate. With the identification system described above, the user can utilize the elements that are available in his terminal 20 to produce the displacement of a character sequence 40a in one or in the other direction, in order to match a first character of a first password portion S1 with any one of the characters of the second password portion S2. Considering the examples illustrated in figures 2-11, the user receives from the institution 10 in the monitor/display 21 of his terminal 20, a pair of character sequences 40a, 50a, the character sequence 40a being defined by numbers, whereas the other character sequence 50a is defined by alphabet letters.

Considering the exemplary password as being formed by a first password portion S1 defined by the numbers 1234 and by a second password portion S2 defined by the letters LC, the user should begin the validation operation of the access password S to access the institution 10, by trying to match number 1 of the first password portion S1 with any one of the letters LC that form the second password portion S2.

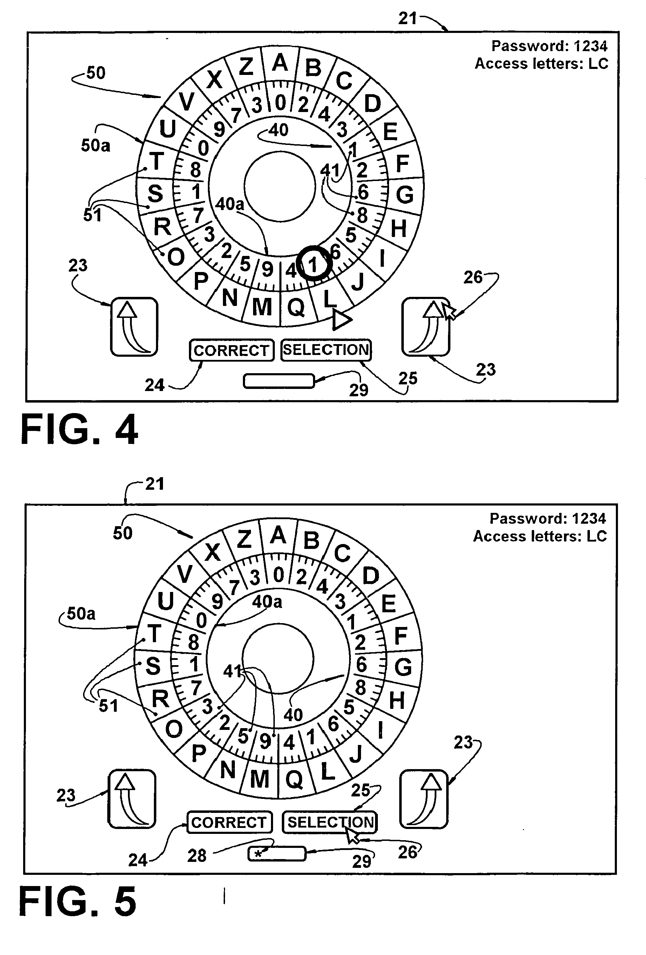

Considering that number 1 of the character sequence 40a is closer to letter L of the second character sequence 50a, the user places the arrow 26 of the mouse over the handling icon 23, activating the mouse so as to cause the displacement of the numeric character sequence 40a in the counterclockwise direction, as illustrated in figure 3, until number 1 occupies the position corresponding to that of letter L, as shown in figure 4. Then, the user places the arrow 26 of the mouse over the character selection icon 25, operating the mouse to register the selection signal in a character chain to be later analyzed by the verifying means 13, taking into consideration each of the relative positionings between the two character sequences 40a, 50a. After registering the first character "1" of the access password S, the system shows a symbol 28 in a window 29 of the monitor/display 21, informing the user that the first character of his access password S has been registered, initiating the formation of a character chain to be submitted to a correspondence validation of the passwords S1, S2.

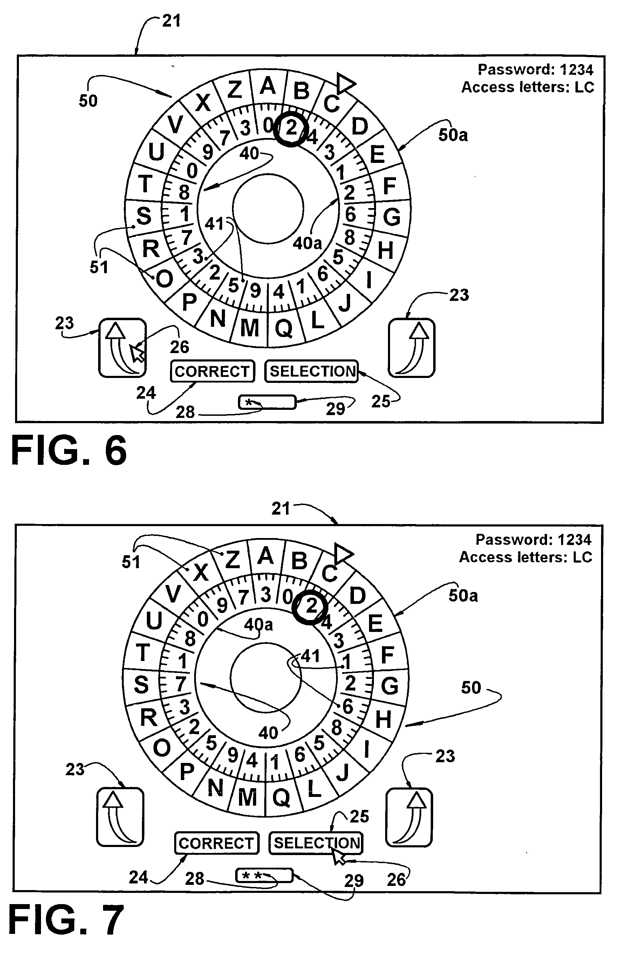

Subsequently, the user verifies the relative position of the second character "2" of the password portion S1 in relation to any of the two characters L and C of the second password portion S2, producing, through the sequence handling means 23 and by using the mouse, the necessary displacement of the numeric character sequence 40a in the counterclockwise direction, to cause number "2" of its password to move from the positioning illustrated in figures 5 e 6 to the positioning illustrated in figure 7, in which number "2" of the access password S now occupies a position corresponding to letter C of the second password portion S2.

Once the relative positioning illustrated in figure 7 has been obtained, the user promotes a respective selection of the second character of his password, registering this second character and combining it to the character chain to be transmitted to the institution 10, and a second symbol 28 appears in the window 29 of the monitor/display 21 to visually confirm the operation just executed.

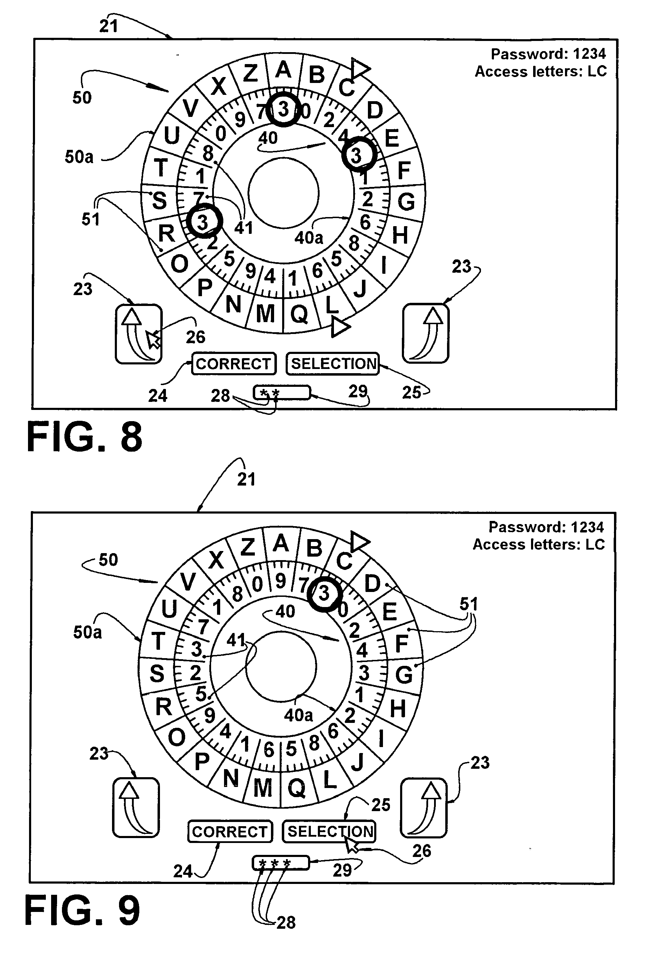

Figures 8, 9, 10, e 11 illustrate, graphically, the corresponding operations effected by both the user and the present identification system to register the other two numbers "3", e "4" that constitute the first password portion S1.

As mentioned above, it should be understood that the access password S can be formed by different characters, utilizing the same nature of characters for the different character sequences presented to the user in the monitor/display 21 of his terminal 20. Considering that each operation to access the institution 10 sends to the monitor/display 21 of the terminal 20 of each user a different character arrangement for the different character sequences 40a, 50a utilized by the system, the data exchanged between the user and the institution take the form of a code that operates randomly at each access operation, allowing the institution to verify whether the user is actually a qualified user to access the institution 10, by checking the password previously established for this user, without requiring said password to be transmitted, at any time, between the institution and the user.

A system for identifying a password for a user to electronically access an institution may comprise an access password (S) formed by characters (41, 51) selected from at least two different character sets (40, 50) that define respective portions (S1, S2) of the access password (S); - a communication means (30) for transmitting instructions and characters of the user's personal identification between the user and the institution (10); - a personal identification generating means (11) that randomly generates and transmits character sequences (40a, 50a) to the monitor/display (21) of the user's terminal (20), at each access operation, selected from a respective character set (40, 50);- a sequence handling means (22) to provide, on the monitor/display (21) of the terminal (20), successive displacements of a character sequence (40a, 50a) in relation to the other; - a character selecting means (27) to be operated by the user, in order to register each correspondence positioning selected by the user between a character of a character sequence belonging to a portion (S1) of the access password (S) and a character of another character sequence belonging to another portion (S2) of access password (S), combining them in a selection signal to be then sent to the institution; - a verifying means (13) operated by the institution (10) to verify whether the selection signal produced by the user and which contains the register of each positioning selected by the user indicates the character positionings of a password portion (S1) corresponding to the character positioning of another password portion (S2), to be validated by the system and, if positive, to release the electronic access of the user to the institution.

## Claims

1. A system for identifying a password for a user to electronically access an institution (10) of restricted access, via Internet, from a fixed or mobile terminal (20) provided with a monitor/display (21), **characterized in that** said system comprises:
- an access password (S) formed by characters (41, 51) selected from at least two different character sets (40, 50) that define respective portions (S1, S2) of the access password (S), which are previously provided to and memorized by the user;
- a communication means (30) for transmitting instructions and characters of the user's personal identification, between the user and the institution (10) ;
- a personal identification generating means (11) to be operated by the institution (10), in order to randomly generate and transmit character sequences (40a, 50a) to the monitor/display (21) of the user's terminal (20), at each access operation, each sequence (40a, 50a) comprising a certain number of characters selected from a respective character set (40, 50);
- a sequence handling means (22) to be operated by one of the parts, which sequence can be defined by either the user or the institution (10), in order to provide, on the monitor/display (21) of the terminal (20), successive displacements of a character sequence (40a, 50a) in relation to the other, so as to make each character (41) of said character sequence (40a) to occupy, at each displacement, a positioning corresponding to a character (51) of another character sequence (50a) ;
- a character selecting means (27) operatively associated with the terminal (20) and to be operated by the user, in order to register each correspondence positioning selected by the user between a character of a character sequence belonging to a portion (S1) of the access password (S), and a character of another character sequence belonging to another portion (S2) of the access password (S), combining them in a selection signal to be then sent to the institution;
- a verifying means (13) operated by the institution (10), in order to verify whether the selection signal produced by the user and which contains the register of each positioning selected by the user indicates the character positionings of a password portion (S1) corresponding to the character positioning of another password portion (S2), to be validated by the system and, if positive, to release the electronic access of the user to the institution.

2. The system, as set forth in claim 1, **characterized in that** the number of characters (41, 51) of each character sequence (40a, 50a) are superior to the number of characters selected from the respective character sets (40, 50), in order to form the respective password portions (S1, S2) to be memorized by the user.

3. The system, as set forth in claim 2, **characterized in that** the character sequences (40a, 50a) transmitted to monitor/display (21) of the terminal (20) are arranged in respective concentric and circular alignments.

4. The system, as set forth in claim 3, **characterized in that** the character sequences (40a, 50a) present the same number of characters and are adjacent to each other, each character (41, 51) of one character sequence (40a) occupying a positioning radially aligned with a respective character (41, 51) of the other character sequence (50a).

5. The system, as set forth in claim 1, **characterized in that** the terminal (20) is a computer.

6. The system, as set forth in claim 1, **characterized in that** the terminal (20) is defined by a telephone.

7. The system, as set forth in claim 1, **characterized in that** the operation of validating a password character is effected by the user with the help of a mouse operatively associated with the respective terminal (20).

8. The system, as set forth in claim 1, **characterized in that** the operation of selecting a character of the access password (S) made by the user is obtained by means of commands incorporated to the terminal (20) of said user.

9. The system, as set forth in claim 1, **characterized in that** the operation of selecting a character of the access password (S) is effected by means of a voice command.
